# EUROPÄISCHE PATENTANMELDUNG

(11) **EP 4 440 238 A1**
(43) Veröffentlichungstag der Anmeldung: **02.10.2024**
(21) Anmeldenummer: 23176419.2
(22) Anmeldetag: 31.05.2023
(51) Int. Cl.: H04W 84/00

(54) **VERFAHREN ZUM BETREIBEN EINES DRAHTLOSEN INDUSTRIELLEN EDGE-CLOUD-SYSTEMS MIT EINER ODER MEHREREN BASISFUNKSTATIONEN, SOWIE ORCHESTRATIONSMODUL, BASISFUNKSTATION UND ENDGERÄT**

(30) Priorität: 27.03.2023 EP 23164238
(71) Anmelder: Siemens Aktiengesellschaft, 80333 München (DE)
(72) Erfinder: Sauer, Markus, 81739 München (DE); Zeiger, Florian, 85635 Höhenkirchen-Siegertsbrunn (DE)
(74) Vertreter: Siemens Patent Attorneys

(57) **Zusammenfassung**

Bei dem Verfahren zum Betreiben eines drahtlosen industriellen Edge-Cloud-Systems mit einer Basisinfrastruktur mit mindestens einer ersten Basisfunkstation wird die Basisinfrastruktur entlang einer Bahn bewegt und eine Kommunikationsverbindung wird zu mindestens einem entlang der Bahn befindlichen und relativ zur Bahn stationären Endgerät aufgebaut und das mindestens Endgerät wird als zusätzliche zweite Basisfunkstationen herangezogen.

## Beschreibung

Die Erfindung betrifft ein Verfahren zum Betreiben eines drahtlosen industriellen Edge-Cloud-Systems mit einer oder mehreren Basisfunkstationen. Die Erfindung betrifft zudem ein Orchestrationsmodul, eine Basisfunkstation und ein Endgerät.

In vielen industriellen Anwendungsfällen erfordern Edge-Cloud-Systeme keine vollständig kontinuierliche Kommunikation, sondern können auch mit intermittierender Kommunikation arbeiten. Insbesondere wenn große Infrastrukturen oder weiträumige Umgebungen beteiligt sind, finden Kommunikationsvorgänge häufig nur in Teilregionen eines industriellen Edge-Cloud-Systems statt und betreffen nicht das gesamte Edge-Cloud-System. Typische Anwendungen bilden insbesondere IT- oder OT-Komponenten zur Überwachung von Produktions- oder Logistikumgebungen, insbesondere einer Bahninfrastruktur oder einer Landwirtschaftsumgebung. Weitere Anwendungen können Komponenten zur Umwelt- oder Gefahrenüberwachung in großen Gebieten darstellen. Eine kontinuierliche Konnektivität ist in solchen Anwendungsfällen schwer zu realisieren und nur sehr kostenintensiv aufrechtzuerhalten, insbesondere in ländlichen Gebieten oder in Gebieten, in denen feste oder kabelgebundene Kommunikationssysteme anfällig für Manipulation, Diebstahl oder Zerstörung sind.

Es besteht daher ein Bedarf, eine Durchführung von Geräteoperationen oder eine Überwachung sowie Softwareupdates und Fehlerbehandlungen und -verwaltungen auch in den vorher erläuterten Anwendungsfällen zu ermöglichen.

Es ist vor diesem Hintergrund des Standes der Technik daher Aufgabe der Erfindung, ein verbessertes Verfahren zum Betreiben eines drahtlosen industriellen Edge-Cloud-Systems mit einer oder mehreren Basisfunkstationen anzugeben. Es ist zudem Aufgabe der Erfindung, eine verbesserte Basisfunkstation und ein verbessertes Endgerät anzugeben.

Diese Aufgabe der Erfindung wird mit einem Verfahren zum Betreiben eines drahtlosen industriellen Edge-Cloud-Systems mit einer oder mehreren Basisfunkstationen mit den in Anspruch 1 angegebenen Merkmalen sowie mit einem Orchestrationsmodul mit den in Anspruch 10 angegebenen Merkmalen sowie mit einer Basisfunkstation mit den in Anspruch 11 angegebenen Merkmalen und mit einem Endgerät mit den in Anspruch 13 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Betreiben eines drahtlosen industriellen Edge-Cloud-Systems mit einer Basisinfrastruktur mit mindestens einer ersten Basisfunkstation wird die Basisinfrastruktur mit der Basisfunkstation entlang einer Bahn bewegt und eine Kommunikationsverbindung wird zu mindestens einem entlang der Bahn befindlichen und relativ zur Bahn im Wesentlichen stationären Endgerät aufgebaut und das mindestens eine Endgerät wird als mindestens eine zusätzliche zweite Basisfunkstation herangezogen.

Im Wesentlichen stationär im Sinne der vorliegenden Erfindung bedeutet vorteilhaft und bevorzugt, dass die Relativgeschwindigkeit während der Kommunikationsverbindung zwischen erster Basisfunkstation und Bahn größer ist als die Relativgeschwindigkeit zwischen Endgerät und Bahn. Bevorzugt bedeutet "im Wesentlichen stationär", dass die Relativgeschwindigkeit zwischen erster Basisfunkstation und Bahn mindestens dreimal so groß und besonders bevorzugt mindestens zehnmal so groß ist wie die Relativgeschwindigkeit zwischen Endgerät und Bahn. Alternativ und ebenfalls bevorzugt kann "im Wesentlichen stationär" bedeuten, dass der Bewegungsraum, etwa ein Bewegungsradius, des Endgeräts während der Kommunikationsverbindung in seiner größten Abmessung kleiner ist als die zehnfache Abmessung der Basisinfrastruktur entlang der Bahn, besonders bevorzugt kleiner als die dreifache Abmessung der Basisinfrastruktur entlang der Bahn und ganz besonders bevorzugt kleiner als die Abmessung der Basisinfrastruktur entlang der Bahn.

Eine Basisinfrastruktur wird also bei dem erfindungsgemäßen Verfahren, insbesondere in oder an oder mit einem Fahrzeug, bewegt und verbindet sich mit im Wesentlichen stationären Endgeräten, wodurch typische Kommunikationsparadigmen umgekehrt werden, bei denen die Basisstation stationär ist und sich die Endgeräte bewegen. Durch die Umkehrung des traditionellen Kommunikationsparadigmas, d. h. durch die Nutzung von Basisfunkstationen, die einen festen Bereich abdecken und mobile Einheiten verbinden, können Edge-Cloud-Systeme für stationäre Endgeräte flexibel, zu geringeren Kosten und ohne die negativen Einflüsse von Schäden an großen festen Infrastrukturen betrieben werden. Darüber hinaus kann dieser Ansatz auch die Energieeffizienz unterstützen, da Kommunikationsinfrastruktur, die derzeit nicht entlang der Betriebsbahn der beweglichen Basisstation verwendet wird, in einen Schlafmodus versetzt werden kann. Es versteht sich, dass die zweite Basisfunkstation bei dem erfindungsgemäßen Verfahren für im Wesentlichen stationäre Endgeräte herangezogen wird.

Kernidee dieser Erfindung ist es also, die Basisinfrastruktur für drahtlose Kommunikation, insbesondere mittels 5G und/oder 6G, in Edge-Cloud-Systemen vollständig und dauerhaft mobil auszubilden. Auch während des Betriebs ist mittels des erfindungsgemäßen Verfahrens eine Anbindung von Endgeräten an eine ortsfeste Kommunikationsinfrastruktur selbst in Gebieten ohne eine ortsfeste Kommunikationsinfrastruktur möglich.

Mittels des erfindungsgemäßen Verfahrens wird daher das typische Paradigma umgekehrt, dass Basisfunkstationen während des Betriebs von Endgeräten ortsfest fixiert sind und dass sich mit einer Konnektivität ausgestattete Endgeräte relativ zu den Basisfunkstationen mobil bewegen können. Erfindungsgemäß hingegen können Basisfunkstationen als mobile Basisfunkstationen herangezogen werden, welche sich zu Endgeräten relativ bewegen, die nun fallweise als stationäre Basisfunkstationen herangezogen werden können.

Bevorzugte Anwendungsfälle des erfindungsgemäßen Verfahrens stellen Mobilitätsanwendungen, insbesondere bei Fahrzeugen, wie vorzugsweise Zügen, dar. In diesen Anwendungsfällen kann die Basisinfrastruktur für die Einrichtung einer Basisinfrastruktur, etwa für 5G und/oder 6G, bereitgestellt werden, indem der Strom für den Betrieb des Systems über das Fahrzeug bereitgestellt wird. Die Basisinfrastruktur ist dabei zweckmäßig über ein nicht-terrestrisches Netzwerk mit einer Cloud verbunden. Ein solches nicht-terrestrisches Netzwerk kann insbesondere mittels Satelliten bereitgestellt sein oder werden.

Insbesondere in einem Zug umfasst eine Basisinfrastruktur häufig mehrere Basisfunkstationen, die einen physischen Zugang zum Mobilfunknetz für Endgeräte im Bereich einer Abdeckung durch die Basisfunkstationen ermöglichen. Da etwa ein Zug in der Regel sehr lang ist, können auch zusätzliche Basisfunkstationen entlang des Zuges verteilt werden, um die räumliche Abdeckung und die zeitliche Dauer der Kommunikationsverbindung für im Wesentlichen stationäre Endgeräte zu erhöhen. Zusätzliche Endgeräte, welche als zweite Basisfunkstationen herangezogen werden können, können etwa entlang einer Bahn in Form eines Gleises nahe dieser Bahn, insbesondere in einer Gleisinfrastruktur, verteilt werden und werden aktiviert, wenn sich die mobile erste mindestens eine Basisfunkstation nähert und eine Kommunikationsverbindung zu diesen Endgeräten zur Etablierung zweiter Basisfunkstationen aufbaut. Die ersten Basisfunkstationen stellen dann die Konnektivität zu als zweite Basisfunkstationen herangezogenen Endgeräten und der entsprechenden festen Infrastruktur bereit, wenn der Zug als mobile Basisstation anfährt. Dieses Zeitfenster für eine bestehende Konnektivität kann dann verwendet werden, um alle Arten von Anwendungsfällen wie zuvor beschrieben durchzuführen, etwa einen Sensordatenaustausch eine Steuerung von Aktoren oder weitere Anwendungsfälle.

Zweckmäßig ist unter einem Heranziehen als zusätzliche zweite Basisfunkstation zu verstehen, dass das Endgerät mit weiteren Endgeräten als zusätzliche zweite Basisfunkstation kommunizieren kann. Besonders bevorzugt wird bei dem erfindungsgemäßen Verfahren die zweite Basisfunkstation derart eingerichtet, dass sie von Endgeräten zur Nutzung der zweiten Basisfunkstation keine abweichenden oder zusätzlichen Zugangscredentials und/oder Authentisierungsinformationen oder Anmeldeinformationen abfragt und/oder fordert als die erste Basisfunkstation abfragt und/oder fordert. Für weitere Endgeräte unterscheidet sich die Kommunikation mit der zweiten Basisfunkstation also nicht von der Kommunikation mit der ersten Basisfunkstation des industriellen Edge-Cloud-Systems.

Alternativ oder zusätzlich und ebenfalls besonders bevorzugt wird das Endgerät derart als zweite Basisfunkstation herangezogen und eingerichtet, dass es zur Kommunikation mit weiteren Endgeräten einen oder mehrere andere Kommunikationskanäle nutzt als zur Kommunikation mit der ersten Basisfunkstation. In dieser Weiterbildung müssen sich weitere Endgeräte zur Kommunikation mit der zweiten Basisfunkstation nicht den Kommunikationskanal, den die zweite Basisfunkstation zur Kommunikation mit der ersten Basisfunkstation nutzt, teilen, sondern können einen eigenen Kommunikationskanal ungeteilt und insoweit unbeschränkt nutzen.

Zweckmäßig sind bei dem erfindungsgemäßen Verfahren mehrere Endgeräte entlang der Bahn befindlich und relativ zur Bahn stationär angeordnet und es wird mit den mehreren Endgeräten bei der Bewegung der Basisinfrastruktur dann eine Kommunikationsverbindung aufgebaut und das jeweilige Endgerät als zweite Basisfunkstation herangezogen, wenn die Basisinfrastruktur in Funkreichweite des jeweiligen Endgeräts ist. Geeigneterweise scheidet oder scheiden bei dem erfindungsgemäßen Verfahren eines oder mehrere der Endgeräte als zweite Basisfunkstation aus, wenn die Basisinfrastruktur nicht weiter in Funkreichweite des jeweiligen Endgeräts ist. D. h. bei dem erfindungsgemäßen Verfahren werden diese Endgeräte nicht weiter als zweite Basisfunkstationen herangezogen.

Vorzugsweise wird in einer vorteilhaften Weiterbildung des erfindungsgemäßen Verfahrens mittels der Basisinfrastruktur ermittelt, in welchem Zeitfenster die Basisinfrastruktur in Funkreichweite des jeweiligen Endgeräts ist, wobei die Basisinfrastruktur vorzugsweise vorausberechnet, in welchem Zeitfenster die Basisinfrastruktur in Funkreichweite des jeweiligen Endgeräts ist. Besonders bevorzugt werden dabei die Bewegung des Basisinfrastruktur entlang der Bahn und/oder die Positionierung des jeweiligen Endgeräts an der Bahn und/oder ein Kommunikationsbedarf des jeweiligen Endgeräts berücksichtigt. In dieser Weiterbildung der Erfindung wird dann, wenn die Basisinfrastruktur in Funkreichweite des jeweiligen Endgeräts ist, das Endgeräts als zweite Basisfunkstation eingerichtet und die diesbezügliche Kommunikation durchgeführt. Bei einer Vorausberechnung des jeweiligen Zeitfensters kann insbesondere die zur Einrichtung des Endgeräts als zweite Basisfunktion erforderliche Kommunikation geplant und vorbereitet, insbesondere vorausberechnet, werden.

Vorzugsweise wird bei dem erfindungsgemäßen Verfahren das Endgerät als solche zweite Basisfunkstation herangezogen, welche zur Kommunikation mittels zwei oder mehr Kommunikationsprotokollen eingerichtet ist. In dieser Weiterbildung dient die zweite Basisfunkstation nicht allein zur Anwendung eines einzigen Kommunikationsprotokolls, sondern die zusätzliche zweite Basisfunkstation kann die Aufgaben herkömmlicher Basisfunkstationen vollumfänglich übernehmen.

Idealerweise ist bei dem erfindungsgemäßen Verfahren die mindestens eine erste Basisfunkstation zur Kommunikation nach einem Mobilfunkstandard und/oder 5G-Standard und/oder 6G-Standard, insbesondere dem 3GPP-Standard, ausgebildet.

Zweckmäßig ist bei dem Verfahren gemäß der Erfindung die zusätzliche zweite Basisfunkstation zur Vermittlung von Kommunikationsverbindungen von zwei oder mehr Endgeräten miteinander ausgebildet. Auf diese Weise bildet die zweite Basisfunkstation nicht allein einen Uplink für weitere zusätzliche Endgeräte, sondern die zweite Basisfunkstation bildet einen vollumfänglichen Provider für sämtliche Kommunikationsverbindungen weiterer Endgeräte.

In einer vorteilhaften Weiterbildung ist bei dem erfindungsgemäßen Verfahren die zusätzliche zweite Basisfunkstation zur Vermittlung von Kommunikationsverbindungen mindestens eines Endgeräts mit einer Cloud des Edge-Cloud-Systems ausgebildet. In dieser Weiterbildung der Erfindung können sich die weiteren Endgeräte, die mit der zweiten Basisstation verbunden werden, einfach mittels der zweiten Basisfunkstation mit der Cloud verbinden und somit ein Edge-Cloud-System ausbilden.

Geeigneterweise ist bei dem erfindungsgemäßen Verfahren das drahtlose industrielle Edge-Cloud-System ein Fertigungssystem und/oder ein Wartungssystem und/oder ein Logistiksystem. Insbesondere in den vorgenannten industriellen Anwendungsfällen ist die durch das erfindungsgemäße Verfahren bereitgestellte Flexibilität und unaufwändige Erweiterbarkeit besonders vorteilhaft.

Besonders bevorzugt wird bei dem erfindungsgemäßen Verfahren das Endgerät derart als zweite Basisfunkstation herangezogen, dass die zweite Basisfunkstation selbst eine eigene Funkzelle aufbaut.

Bevorzugt stellt in einer Weiterbildung des erfindungsgemäßen Verfahrens dabei die zweite Basisfunkstation mindestens eine eigene Frequenz zur Kommunikation mit weiteren Endgeräten zur Verfügung, die sich von der Frequenz oder den Frequenzen, mit welchen die zweite Basisfunkstation mit der ersten Basisfunkstation in Kommunikationsverbindung steht, unterscheidet.

Vorzugsweise wird bei dem Verfahren gemäß der Erfindung das Endgerät derart als zweite Basisfunkstation herangezogen, dass die zweite Basisfunkstation für die Kommunikation mit weiteren Endgeräten mindestens ein weiteres Kanalzugriffsverfahren nutzt, welches verschieden ist von den Kanalzugriffsverfahren, welche Kommunikationsverbindungen von erster Basisfunkstation und zweiter Basisfunkstation miteinander und Kommunikationsverbindungen von erster Basisfunkstation und weiteren Endgeräten miteinander nutzen.

Vorzugsweise wird bei dem erfindungsgemäßen Verfahren das Endgerät derart als zweite Basisfunkstation herangezogen, dass die zweite Basisfunkstation für die Kommunikation mit weiteren Endgeräten mindestens ein weiteres Authentifizierungsverfahren nutzt, welches verschieden ist von den Authentifzierungsverfahren, welche Kommunikationsverbindungen von erster Basisfunkstation und zweiter Basisfunkstation miteinander und Kommunikationsverbindungen von erster Basisfunkstation und weiteren Endgeräten miteinander nutzen.

Besonders zweckmäßig wird bei dem Verfahren gemäß der Erfindung das bei 5G und/oder 6G etablierte Slicing herangezogen, um Kommunikationsverbindungen zwischen erster Basisfunkstation und der zweiten Basisfunkstation einerseits und der zweiten Basisfunkstation und weiteren Endgeräten andererseits zu trennen.

Mittels der vorgenannten Weiterbildungen der Erfindung kann eine gegenseitige Beeinflussung der Kommunikation zwischen der ersten Basisfunkstation und der zweiten Basisfunkstation einerseits und der zweiten Basisfunkstation und weiteren Endgeräten andererseits minimiert werden.

Besonders zweckmäßig wird bei dem erfindungsgemäßen Verfahren das Endgerät, welches einerseits als zweite Basisfunkstation herangezogen wird, nach wie vor als Endgerät genutzt. In dieser Weiterbildung der Erfindung übernimmt das Endgerät also nicht allein die Funktion der zweiten Basisfunkstation, sondern fungiert nach wie vor als Endgerät mit von der Funktion der zweiten Basisfunkstation verschiedenen Funktionen.

Bevorzugt wird bei dem erfindungsgemäßen Verfahren das Endgerät derart als zweite Basisfunkstation herangezogen, dass die zweite Basisfunkstation Kernfunktionalitäten der ersten Basisfunkstation, insbesondere die SMO-Funktion/en und/oder die CORE-Funktion/en, nutzt.

Bevorzugt wird bei dem erfindungsgemäßen Verfahren die Konfiguration des Endgeräts mittels, insbesondere von, der ersten Basisfunkstation festgelegt, während dieses Endgerät als zweite Basisfunkstation herangezogen wird.

Bei dem erfindungsgemäßen Verfahren wird zweckmäßig die Kommunikationsverbindung von erster Basisfunkstation und zweiter Basisfunkstation für solche Endgeräte, welche sich mit der zweiten Basisfunkstation verbinden, transparent gehalten.

Das erfindungsgemäße Orchestrationsmodul ist ausgebildet zur Teilnahme an einem erfindungsgemäßen Verfahren wie vorhergehend beschrieben. Das erfindungsgemäße Orchestrationsmodul ist zweckmäßig ausgebildet, zu ermitteln, in welchem Zeitfenster die Basisinfrastruktur in Funkreichweite des jeweiligen Endgeräts ist, wobei das Orchestrationsmodul die Bewegung des Basisinfrastruktur entlang der Bahn und/oder die Positionierung des jeweiligen Endgeräts an der Bahn und/oder ein Kommunikationsbedarf des jeweiligen Endgeräts berücksichtigt. Auf diese Weise können sowohl die voraussichtliche Bewegung der Basisinfrastruktur entlang der Bahn als auch der Kommunikationsbedarf der jeweiligen Endgeräte vorab aufeinander abgestimmt werden und der dazu erforderliche Abstimmungsaufwand, etwa in Gestalt einer abstimmenden Kommunikation, von Endgeräten mit der ersten Basisfunkstation, vorausgeplant werden.

Die erfindungsgemäße Basisfunkstation ist ausgebildet zur Teilnahme als erste Basisfunkstation an einem erfindungsgemäßen Verfahren wie vorhergehend beschrieben. Die erfindungsgemäße Basisstation ist ausgebildet, eine Kommunikationsverbindung zu einem im Wesentlichen stationären Endgerät aufzubauen und das Endgerät als zusätzliche zweite Basisfunkstation heranzuziehen und einzurichten.

Bevorzugt ist die erfindungsgemäße Basisfunkstation ausgebildet, mittels der Kommunikationsverbindung Kommunikationsverbindungen der zweiten Basisfunkstation mit der Cloud zu vermitteln.

Das erfindungsgemäße Endgerät ist zweckmäßig zur Teilnahme an einem erfindungsgemäßen Verfahren wie vorhergehend beschrieben ausgebildet. Das erfindungsgemäße Verfahren ist zur Kommunikationsverbindung mit einer ersten Basisstation eines drahtlosen industriellen Edge-Cloud-Systems eingerichtet und ausgebildet, eine Funktion als zusätzliche zweite Basisfunkstation zu übernehmen und weitere Kommunikationsverbindungen dieser Funktion über die Kommunikationsverbindung mit der ersten Basisstation des drahtlosen industriellen Edge-Cloud-Systems zu vermitteln.

Vorzugsweise umfasst bei dem erfindungsgemäßen Endgerät die Kommunikationsverbindung der Funktion eine Kommunikationsverbindung in eine Cloud des drahtlosen industriellen Edge-Cloud-Systems.

Bevorzugt ist oder umfasst das erfindungsgemäße Endgerät ein Fertigungsgerät und/oder ein Wartungsgerät und/oder ein Logistikgerät.

Zweckmäßig ist das erfindungsgemäße Endgerät derart eingerichtet, dass es beim Übernehmen der Funktion als zweite Basisfunkstation von weiteren Endgeräten keine abweichenden oder zusätzlichen Zugangscredentials und/oder Authentisierungsinformationen oder Anmeldeinformationen abfragt und/oder fordert als die erste Basisfunkstation abfragt und/oder fordert. Für weitere Endgeräte unterscheidet sich die Kommunikation mit der zweiten Basisfunkstation also nicht von der Kommunikation mit der ersten Basisfunkstation des industriellen Edge-Cloud-Systems.

Alternativ oder zusätzlich und ebenfalls besonders bevorzugt ist das erfindungsgemäße Endgerät derart eingerichtet, dass es zur Kommunikation mit weiteren Endgeräten einen oder mehrere andere Kommunikationskanäle nutzt als zur Kommunikation mit der ersten Basisfunkstation. In dieser Weiterbildung müssen sich weitere Endgeräte zur Kommunikation mit der zweiten Basisfunkstation nicht den Kommunikationskanal, den die zweite Basisfunkstation zur Kommunikation mit der ersten Basisfunkstation nutzt, teilen, sondern können einen eigenen Kommunikationskanal ungeteilt und insoweit unbeschränkt nutzen.

Nachfolgend wird die Erfindung anhand eines in der Zeichnung dargestellten Ausführungsbeispiels näher erläutert.

Die einzige Zeichnungsfigur 1 zeigt schematisch in einer Prinzipskizze ein Ausführungsbeispiel eines drahtlosen industriellen Edge-Cloud-Systems mit einer Basisinfrastruktur mit mindestens einer ersten Basisfunkstation, bei welchem die Basisinfrastruktur entlang einer Bahn bewegt wird, zur Ausführung eines erfindungsgemäßen Verfahrens, wobei das Edge-Cloud-System ein erfindungsgemäßes Orchestrationsmodul und eine erfindungsgemäße Basisfunkstation sowie ein erfindungsgemäßes Endgerät umfasst.

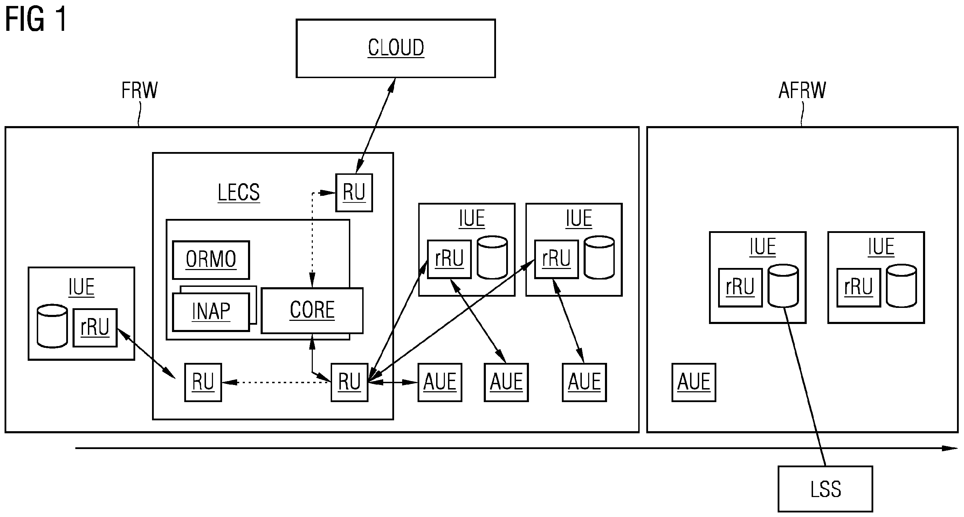

Im in Fig. 1 gezeigten Ausführungsbeispiel wird ein drahtloses industrielles Edge-Cloud-System betrieben. Dieses industrielle Edge-Cloud-System ist im dargestellten Ausführungsbeispiel ein Fertigungssystem. In weiteren, nicht eigens dargestellten Ausführungsbeispielen kann das industrielle Edge-Cloud-System auch ein Wartungssystem oder ein Logistiksystem sein.

Grundsätzlich kann in weiteren nicht eigens dargestellten Ausführungsbeispielen die Kommunikationstechnologie auch eine 6G-Technologie oder eine sonstige mobile Kommunikationstechnologie sein.

Zur Durchführung des erfindungsgemäßen Verfahrens wird im dargestellten Ausführungsbeispiel eine mobile Infrastruktur in Gestalt einer mobilen Standard-5G-Systeminfrastruktur LECS sowie eine neue Systemkomponente in Gestalt eines Infrastrukturendgeräts IUE herangezogen. Zudem wird eine weitere neue Systemkomponente in Gestalt eines Orchestrationsmoduls herangezogen.

Das dargestellte industrielle Edge-Cloud-System umfasst eine mobile Standard-5G-Systeminfrastruktur LECS und genügt dem 3GPP-Standard. Die Standard-5G-Systeminfrastruktur LECS lässt sich auch als Basis-5G-System bezeichnen und unterstützt definierte Ressourcenzuordnungen inklusive Garantien für eine Quality-of-Service, etwa für Slices in 5G-Systemen, und ist für die Kommunikation mit Endgeräten AUE und nachfolgend erläuterten Infrastrukturendgeräten IUE konfiguriert.

Die Standard-5G-Systeminfrastruktur LECS ist im dargestellten Ausführungsbeispiel Teil einer Bordausstattung eines Fahrzeugs, welches eine vorausgeplante Route befährt. Im dargestellten Ausführungsbeispiel ist das Fahrzeug ein Schienenfahrzeug in Gestalt eines Zuges. In weiteren, nicht eigens dargestellten Ausführungsbeispielen kann das Fahrzeug auch ein sonstiges Landfahrzeug oder ein Luftfahrzeug, beispielsweise ein Flugzeug oder ein unbemanntes Luftfahrzeug, beispielsweise eine Drohne, oder ein Seefahrzeug, beispielsweise ein Schiff, sein.

Das industrielle Edge-Cloud-System ist so konfiguriert, dass Kommunikationsverbindungen zu Infrastrukturkomponenten der Standard-5G-Systeminfrastruktur LECS, beispielsweise mittels sogenannten "Slicings", mit einer Anzahl definierter Qualitätskriterien möglich sind. Solche Infrastrukturkomponenten umfassen in an sich bekannter Weise Service-Management-/Orchestration-Einrichtungen SMO, grundlegende Basiseinrichtungen CORE sowie zentralisierte Einheiten, sogenannte "centralized units", und verteilte Einheiten, sogenannte "decentralized units". Diese Infrastrukturkomponenten können auch als Backbone-Komponenten bezeichnet werden. Die Infrastrukturkomponenten stellen die internen Funkzugangsnetzkomponenten der Standard-5G-Systeminfrastruktur LECS dar.

Ferner umfasst die Standard-5G-Systeminfrastruktur LECS Basisfunkstationen RU, die direkt mit der Standard-5G-Systeminfrastruktur LECS kommunikationsverbunden sind und welche einerseits den Infrastrukturkomponenten Kommunikationsverbindungen untereinander sowie zu nicht zur Standard-5G-Systeminfrastruktur LECS gehörenden Endgeräten AEU und in die Cloud CLOUD ermöglichen. Die Basisfunkstationen RU sind dabei mit der übrigen Standard-5G-Systeminfrastruktur bewegungsgekoppelt und sind vorliegend starr an das sich bewegende Fahrzeug fixiert.

Andererseits ermöglichen diese Basisfunkstationen RU auch Endgeräten AUE in einer Funkreichweite des Fahrzeugs, welche nicht zu den Infrastrukturkomponenten der Standard-5G-Systeminfrastruktur LECS zählen, Kommunikationsverbindungen untereinander und mittels der Standard-5G-Systeminfrastruktur LECS in die Cloud CLOUD. Diese Basisfunkstationen RU können unterschiedliche Frequenzen für die Kommunikation mit Endgeräten AUE und nachfolgend beschriebenen Infrastrukturendgeräten IUE verwenden.

Teil des dargestellten industriellen Edge-Cloud-Systems sind allerdings nicht allein die Endgeräte AUE und die Standard-5G-Systeminfrastruktur LECS. Es tritt eine spezielle Gruppe von Endgeräten hinzu, welche als Infrastrukturendgeräte IUE bezeichnet werden.

Diese Infrastrukturendgeräte IUE sind dazu ausgebildet und eingerichtet, Kommunikationsverbindungen zur Standard-5G-Systeminfrastruktur LECS derart einzurichten, dass die Infrastrukturendgeräte IUE Backbone-Kommunikationsverbindungen zu weiteren Endgeräten AUE zur Verfügung stellen.

Die Infrastrukturendgeräte IUE kommunizieren mit der Standard-SG-Systeminfrastruktur LECS, also dem lokalen 5G-Kommunikationssystem, über eine definierte Ressourcenzuweisung, beispielsweise mittels 5G-Slices, um die Infrastrukturendgeräte IUE mit der lokalen Standard-5G-Systeminfrastruktur LECS zu verbinden.

Die Infrastrukturendgeräte IUE selbst verfügen ebenfalls über Infrastrukturkomponenten wie verteilte Einheiten rDU des Infrastrukturgeräts IUE. Zudem umfassen die Infrastrukturendgeräte IUE zusätzlich jeweils mindestens ein eigene Remote-Funkmodul rRU. Die verteilten Einheiten rDU der Infrastrukturendgeräte IUE verwalten und betreiben die Remote-Funkmodule rRU der Infrastrukturendgeräte IUE.

Die Infrastrukturendgeräte IUE verbinden sich selbst mittels ihrer eigenen Remote-Funkmodule rRU mit den Kernkomponenten der Standard-5G-Systeminfrastruktur LECS und richten hiermit Backbone-Kommunikationsverbindungen für Benutzerverkehr, Signalisierung und Verwaltung für weitere Endgeräte AUE ein.

Basierend auf dieser Backbone-Kommunikation zur Standard-5G-Systeminfrastruktur LECS bieten die Infrastrukturendgeräte IUE mittels ihrer eigenen Remote-Funkmodule rRU zusätzlich Kommunikationsverbindungen zu weiteren Endgeräten AUE an, die normalerweise nicht im Abdeckungsbereich der mit der Standard-SG-Systeminfrastruktur LECS verbundenen Basisfunkstationen RU liegen.

Die weiteren Endgeräte AUE stellen herkömmliche "normale" Endgeräte dar, beispielsweise ein industrielles Handgerät oder einen industriellen 5G-Router. Es wird für die Kommunikation zwischen Benutzeranwendungsendpunkten auf anderen UEs oder in einem Backend-System verwendet. Diese weiteren Endgeräte AUE umfassen beispielsweise Sensoren, Sensorsysteme, Aktoren oder industrielle 5G-Router. Solche weiteren Endgeräte AUE hosten in der Regel Anwendungen wie die nachfolgend erläuterten Infrastrukturanwendungen INAP und generieren oder sammeln Daten, die an das Backend-System übertragen werden sollen und können auch Aktor- und Befehlsdaten, die vom Backend-System empfangen werden, zur Ausführung beispielsweise an Aktoren weiterleiten.

Die Remote-Funkmodule rRU der Infrastrukturendgeräte IUE bieten Funkzugriff auf weitere Endgeräte AUE ohne versehentliche Störung ihrer eigenen Kommunikationsverbindung zur Standard-5G-Systeminfrastruktur LECS.

Somit ist eine Reichweitenerweiterung der lokalen Kommunikation durch effiziente Wiederverwendung der vorhandenen (gleichen) Kommunikationstechnologie möglich - ohne die Notwendigkeit einer nahtlosen Integration verschiedener Technologien.

Im dargestellten Ausführungsbeispiel umfasst die Standard-5G-Systeminfrastruktur LECS zudem Softwarekomponenten, die Infrastrukturanwendungen INAP bilden, sowie ein Orchestrationsmodul ORMO.

Das Orchestrationsmodul ORMO plant die Kommunikationsverbindungen der Basisfunkstationen des Standard-5G-Systeminfrastruktur LECS mit den Infrastrukturendgeräten IUE. Dazu zieht das Orchestrationsmodul ORMO eine Routenplanung sowie Navigationsaufgaben und eine Position des Fahrzeugs heran. Das Orchestrationsmodul ORMO umfasst zudem eine Datenbank zu den verfügbaren Infrastrukturendgeräten und zu ihren aktuellen Aufenthaltsorten. Zudem sind im Orchestrationsmodul ORMO Anforderungen der Infrastrukturendgeräte IUE zu ihrem Einsatz als Mobilfunkstationen gespeichert. Das Orchestrationsmodul ORMO hat zudem Zugriff auf die Aufgaben der Infrastrukturanwendungen INAP und ihre Anforderungen an die Kommunikationsfähigkeiten der Infrastrukturendgeräte IUE. Anhand der vorgenannten Informationen können Kommunikationstopologien vorgeplant und ein Konnektivitätszeitplan erstellt werden. Sobald entfernte Infrastrukturendgeräte IUE dem Fahrzeug nahe genug kommen, um eine Kommunikation herzustellen, also sobald die Infrastrukturendgeräte IUE in Funkreichweite FRW der Standard-5G-Systeminfrastruktur LECS sind, wird eine Konfiguration der Infrastrukturendgeräte IUE für das Einrichten der Infrastrukturendgeräte IUE als relativ zur Bahn des Fahrzeugs stationäre Basisfunkstationen vorgenommen und der für den Betrieb als stationäre Basisfunkstationen erforderliche Informationsaustausch wird durchgeführt. Zusätzliche Aufgaben des Orchestrationsmoduls sind Eine Konfigurationsaktualisierung der Infrastrukturendgeräte IUE sowie der Betrieb der Verwaltung von Anwendungsmandantennetzwerken sowie eine Stilllegung von Infrastrukturendgeräten IUE über Managementschnittstellen der Infrastrukturendgeräte. Zusätzlich werden Infrastrukturendgeräte dann, wenn sie nach dem Konnektivitätszeitplan absehbar in ein Gebiet AFRW außerhalb der Funkreichweite der Standard-5G-Systeminfrastruktur LECS geraten werden, von der Standard-5G-Systeminfrastruktur LECS wieder als normales Endgerät AUE umkonfiguriert und nicht weiter als Basisfunkstation berücksichtigt.

Infrastrukturanwendungen INAPS sind Anwendungen zur Erledigung von Aufgaben des jeweiligen Use Case. Infrastrukturanwendungen INAPS verarbeiten im gezeigten Ausführungsbeispiel Daten, die mittels Endgeräten AUE, die keine Infrastrukturendgeräte IUE sind, gesammelt werden, und senden Befehle über Anwendungs-UEs an den Aktor. Infrastrukturanwendungen verwenden in der Regel ein Anwendungsmandantennetzwerk.

Die Infrastruktureinheiten IUE weisen zudem lokale Datenspeicher sowie Datenverarbeitungsfunktionen LSS auf, die genutzt werden können, solange solange keine Kommunikationsverbindung zur Cloud besteht.

Die Standard-5G-Systeminfrastruktur LECS ist mittels eines nichtterrestrischen, im gezeigten Ausführungsbeispiel mittels eines satellitengestützten, Funkzugangs mit der Cloud verbunden.

## Patentansprüche

1. Verfahren zum Betreiben eines drahtlosen industriellen Edge-Cloud-Systems mit einer Basisinfrastruktur (LECS) mit mindestens einer ersten Basisfunkstation (RU), bei welchem die Basisinfrastruktur (LECS) entlang einer Bahn bewegt wird und eine Kommunikationsverbindung zu mindestens einem entlang der Bahn befindlichen und relativ zur Bahn stationären Endgerät (IUE) aufgebaut wird und das mindestens eine Endgerät (IUE) als zusätzliche zweite Basisfunkstation (rRU) herangezogen wird.

2. Verfahren nach dem vorhergehenden Anspruch, bei welchem mehrere Endgeräte (IUE) entlang der Bahn befindlich und relativ zur Bahn stationär angeordnet sind und mit den mehreren Endgeräten (IUE) bei der Bewegung der Basisinfrastruktur (LECS) dann eine Kommunikationsverbindung aufgebaut und das jeweilige Endgerät (IUE) als zweite Basisfunkstation (rRU) herangezogen wird, wenn die Basisinfrastruktur in Funkreichweite (FRW) des jeweiligen Endgeräts (IUE) ist.

3. Verfahren nach einem der vorhergehenden Ansprüche, bei welchem eines oder mehrere der Endgeräte (IUE) als zweite Basisfunkstation (rRU) ausscheiden, wenn die Basisinfrastruktur (LECS) nicht (AFRW) weiter in Funkreichweite (FRW) des jeweiligen Endgeräts ist.

4. Verfahren nach einem der vorhergehenden Ansprüche, bei welchem mittels der Basisinfrastruktur (LECS) ermittelt wird, in welchem Zeitfenster die Basisinfrastruktur (LECS) in Funkreichweite (FRW) des jeweiligen Endgeräts (IUE) ist, wobei vorzugsweise die Bewegung des Basisinfrastruktur (LECS) entlang der Bahn und/oder die Positionierung des jeweiligen Endgeräts (IUE) an der Bahn und/oder ein Kommunikationsbedarf des jeweiligen Endgeräts (IUE) berücksichtigt werden.

5. Verfahren nach einem der vorhergehenden Ansprüche, bei welchem das Endgerät (IUE) als solche zweite Basisfunkstation (rRU) herangezogen wird, welche zur Kommunikation mittels zwei oder mehr Kommunikationsprotokollen eingerichtet ist.

6. Verfahren nach einem der vorhergehenden Ansprüche, bei welchem die mindestens eine erste Basisfunkstation (RU) zur Kommunikation nach einem Mobilfunkstandard und/oder 5G-Standard und/oder 6G-Standard, insbesondere nach dem 3GPP-Standard, ausgebildet ist.

7. Verfahren nach einem der vorhergehenden Ansprüche, bei welchem die zusätzliche zweite Basisfunkstation (rRU) zur Vermittlung von Kommunikationsverbindungen von zwei oder mehr Endgeräten (AUE) miteinander ausgebildet ist.

8. Verfahren nach einem der vorhergehenden Ansprüche, bei welchem die zusätzliche zweite Basisfunkstation (rRU) zur Vermittlung von Kommunikationsverbindungen mindestens eines Endgeräts (AUE) mit einer Cloud (CLOUD) des Edge-Cloud-Systems ausgebildet ist.

9. Verfahren nach einem der vorhergehenden Ansprüche, bei welchem das drahtlose industrielle Edge-Cloud-System ein Fertigungssystem und/oder ein Wartungssystem und/oder ein Logistiksystem ist.

10. Orchestrationsmodul, ausgebildet zur Teilnahme an einem Verfahren nach einem der vorhergehenden Ansprüche, welches ausgebildet ist, zu ermitteln, in welchem Zeitfenster die Basisinfrastruktur (LECS) in Funkreichweite des jeweiligen Endgeräts (IUE) ist, wobei das Orchestrationsmodul (ORMO) die Bewegung des Basisinfrastruktur (LECS) entlang der Bahn und/oder die Positionierung des jeweiligen Endgeräts (IUE) an der Bahn und/oder ein Kommunikationsbedarf des jeweiligen Endgeräts (IUE) berücksichtigt.

11. Basisfunkstation, ausgebildet zur Teilnahme als erste Basisstation (RU) an einem Verfahren nach einem der vorhergehenden Ansprüche, welche ausgebildet ist, eine Kommunikationsverbindung zu einem Endgerät (IUE) aufzubauen und das Endgerät (IUE) als zusätzliche zweite Basisfunkstation (rRU) heranzuziehen und einzurichten.

12. Basisfunkstation nach dem vorhergehenden Anspruch, welches ausgebildet ist, mittels der Kommunikationsverbindung Kommunikationsverbindungen der zweiten Basisfunkstation (rRU) mit der Cloud (CLOUD) zu vermitteln.

13. Endgerät, ausgebildet zur Teilnahme an einem Verfahren nach einem der vorhergehenden Ansprüche, welches zur Kommunikationsverbindung mit einer ersten Basisstation (RU) eines drahtlosen industriellen Edge-Cloud-Systems eingerichtet ist und welches ausgebildet ist, eine Funktion als zusätzliche zweite Basisfunkstation (rRU) zu übernehmen und weitere Kommunikationsverbindungen dieser Funktion über die Kommunikationsverbindung mit der ersten Basisstation (RU) des drahtlosen industriellen Edge-Cloud-Systems zu vermitteln.

14. Endgerät nach dem vorhergehenden Anspruch, bei welchem die Kommunikationsverbindung der Funktion eine Kommunikationsverbindung in eine Cloud (CLOUD) des drahtlosen industriellen Edge-Cloud-Systems umfasst.

15. Endgerät nach einem der vorhergehenden Ansprüche, welches ein Fertigungsgerät und/oder ein Wartungsgerät und/oder ein Logistikgerät ist oder umfasst.
